# EUROPÄISCHE PATENTSCHRIFT

(11) **EP 3 712 218 B1**
(45) Veröffentlichungstag und Bekanntmachung des Hinweises auf die Patenterteilung: **26.01.2022**
(21) Anmeldenummer: 19164494.7
(22) Anmeldetag: 22.03.2019
(51) Int. Cl.: C09D 5/18, C09K 21/12

(54) **BRANDSCHUTZZUSAMMENSETZUNG UND DEREN VERWENDUNG**
FLAME RETARDANT COMPOUND AND USE OF SAME
COMPOSITION IGNIFUGE ET SON UTILISATION

(43) Veröffentlichungstag der Anmeldung: 23.09.2020
(73) Patentinhaber: Hilti Aktiengesellschaft, 9494 Schaan (LI)
(72) Erfinder: Meier, Christoph, 63486 Bruchköbel (DE); Jochmann, Phillip, 89073 Ulm (DE)
(74) Vertreter: Hilti Aktiengesellschaft Corporate Intellectual Property

(56) Entgegenhaltungen:
- EP-A1- 0 333 514
- WO-A1-2013/150121
- WO-A1-2018/095361
- T. MARIAPPAN: "Recent developments of intumescent fire protection coatings for structural steel: A review", JOURNAL OF FIRE SCIENCES, Bd. 34, Nr. 2, 27. Januar 2016 (2016-01-27), Seiten 120-163, XP055352866, GB ISSN: 0734-9041, DOI: 10.1177/0734904115626720

## Beschreibung

Die vorliegende Erfindung betrifft eine Brandschutzzusammensetzung, insbesondere eine Brandschutzzusammensetzung mit intumeszierenden Eigenschaften, die ein Bindemittel auf Basis eines organischen wärmehärtbaren Polymers enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren verschiedene Systeme, wobei derzeit insbesondere intumeszierende Zusammensetzungen für Brandschutzbeschichtungen auf Epoxid-Basis oder auf Basis von silan-modifizierten Polymeren im Markt erhältlich sind. Zusammensetzungen auf Epoxid-Basis sind beispielsweise aus der WO 2017/050762 A1, der WO 2016/170122 A1, der WO 2015/007628 A1, der WO 2014/095502 A1, der WO 2010/054984 A1, der O 2008/035976 A1 und der WO 1998/12270 A1 bekannt. Zusammensetzung auf Basis von MS-Polymeren sind beispielsweise aus der WO 2010/131037 A1 und der WO 2012/065716 A1 bekannt.

Die in der WO 2014/095502 A1 offenbarte Zusammensetzung auf Epoxid-Thiol-Basis, besitzt eine relativ hohe Expansionsrate, wodurch in einfacher und schneller Weise Beschichtungen mit der für die jeweilige Feuerwiderstandsdauer erforderlichen Schichtdicken aufgetragen werden können, wobei die Schichtdicke auf ein Minimum reduziert und dennoch eine große isolierende Wirkung erreicht werden kann. Nachteilig an diesen Zusammensetzungen ist, dass um die jeweilige Feuerwiderstandsdauer zu erreichen, ein hoher Feststoffanteil erforderlich ist, da meist mehr als 50 Gew.-% an Intumeszenzadditiven in der Zusammensetzung notwendig werden. Dieser hohe Feststoffanteil führt jedoch dazu, dass die Oberflächenrauigkeit der resultierenden ausgehärteten Beschichtung, insbesondere wenn die Zusammensetzung per Hand oder Sprühen appliziert wurde, mit steigendem Feststoffanteil zunimmt. Dementsprechend nimmt der Glanz der ausgehärteten Beschichtung ab. Die Kombination aus Oberflächenrauigkeit und Glanz wird im Folgenden auch zusammengefasst als Oberflächeneigenschaft bezeichnet. Eine niedrige Oberflächenrauigkeit und ein hoher Glanz entsprechen demnach einer sehr guten Oberflächeneigenschaft.

WO2013/150121, EP0333514, WO2018/095361 und T. MARIAPPAN: "Recent developments of intumescent fire protection coatings for structural steel: A review", JOURNAL OF FIRE SCIENCES, Bd. 34, Nr. 2, (2016-01-27), Seiten 120-163 offenbaren Organopolysiloxan und Epoxidharz enthaltende intumeszierende Brandschutzzusammensetzungen.

Die Anforderungen an eine gute Oberflächeneigenschaft von funktionalen Beschichtungen, wie beispielsweise intumeszierenden Beschichtungen, ist jedoch heutzutage in vielen Anwendungsbereichen gewünscht, vor allem in öffentlich zugänglichen Einrichtungen, wie Sportstadien, Wolkenkratzern, Flughäfen, Bahnhöfen, Verwaltungsgebäuden, und dergleichen.

Es besteht Bedarf an einer Zusammensetzung, die trotz eines hohen Feststoffanteils von mehr als 50 Gew.-% bezogen auf das Gesamtgewicht der Zusammensetzung, eine gute Verarbeitbarkeit und nach der Härtung eine sehr gute Oberflächeneigenschaft aufweist und daher insbesondere in Gebäudebereichen angewendet werden kann, in denen die beschichteten Bauteile gut sichtbar sind.

Der Erfindung liegt daher die Aufgabe zugrunde, eine Zusammensetzung mit hohem Feststoffanteil von mindestens 50 Gew.-% für intumeszierende Beschichtungen auf Epoxid-Basis bereitzustellen, die eine gute Verarbeitbarkeit, insbesondere beim Auftragen der Zusammensetzung durch Sprühen, aufweist.

Der Erfindung liegt daher die weitere Aufgabe zugrunde, eine Zusammensetzung mit hohem Feststoffanteil von mindestens 50 Gew.-% für intumeszierende Beschichtungen auf Epoxid-Basis bereitzustellen, die zu einer Beschichtung mit sehr guter Oberflächeneigenschaft, d.h. sehr geringer Oberflächenrauigkeit und sehr hoher Glanz, aushärtet.

Diese Aufgabe wird durch eine Zusammensetzung nach Anspruch 1 sowie die Verwendung nach Anspruch 8 und 9 gelöst. Bevorzugte Ausführungsformen sind den Unteransprüchen zu entnehmen.

Gegenstand der Erfindung ist demnach eine Brandschutzzusammensetzung für intumeszierende Beschichtungen, wobei die Brandschutzzusammensetzung ein organisch wärmehärtbares Polymer, ein Härtungsmittel für das organisch wärmehärtbare Polymer, einen Säurebildner und bis zu 0,2 Gew.-%, bezogen auf das Gewicht des organisch wärmehärtbaren Polymers und des Härtungsmittels, eines Verlaufsadditivs auf Basis eines Organopolysiloxans umfasst.

Verlaufsadditive können die Oberflächenbeschaffenheit von ausgehärteten Beschichtungen positiv beeinflussen. Die Erfinder haben aber herausgefunden, dass sich die Verlaufsadditive negativ auf die Brandschutzeigenschaften der ausgehärteten Zusammensetzungen auswirken können, so dass durch die Verwendung von Verlaufsadditiven zwar eine gute Oberflächeneigenschaft der Beschichtung erreichen lässt, aber die isolierenden Eigenschaften der Beschichtung im Brandfall negativ beeinflusst werden.

Überraschend hat sich gezeigt, dass bei Verwendung von organisch modifizierten Polysiloxanen, auch Organopolysiloxane genannt, sowohl eine gute Oberflächeneigenschaft der ausgehärteten Beschichtung als auch gute Brandschutzeigenschaften im Brandfall erreicht werden können.

Durch die erfindungsgemäße Verwendung der Organopolysiloxanen können Zusammensetzungen bereitgestellt werden, die aufgrund ihrer niedrigen Viskosität einfach zu verarbeiten ist, d.h. durch die unterschiedlichsten Methoden leicht auf Bauteile aufzutragen aber standfest ist, und durch die nach deren Aushärtung intumeszierende Beschichtung mit einer geringen Oberflächenrauigkeit und damit hohem Glanz erhalten werden können.

Zum besseren Verständnis der Erfindung werden die folgenden Erläuterungen der hierin verwendeten Terminologie als sinnvoll erachtet. Im Sinne der Erfindung:
- bedeutet "*multifunktionell*", dass die entsprechende Verbindung mehr als eine funktionelle Gruppe pro Molekül aufweist; dementsprechend bedeutet multifunktionell im Zusammenhang mit Epoxidverbindungen, dass diese mehr als eine Epoxidgruppen pro Molekül aufweisen, und in Bezug auf Thiol-funktionalisierte Verbindungen, dass diese wenigstens zwei Thiolgruppen pro Molekül aufweisen; die Gesamtzahl der jeweiligen funktionellen Gruppen ist die Funktionalität der entsprechenden Verbindung;
- bedeutet "*wärmehärtbar*", dass das funktionelle Gruppen tragende organische Polymer bei der Zugabe eines entsprechenden Härtungsmittels mit diesem bei Raumtemperatur, gegebenenfalls unter Zugabe eines Katalysators, reagiert (vernetzt);
- bedeutet "*Gerüst*" des Epoxidharzes oder der Thiol-funktionalisierten Verbindung der jeweils andere Teil des Moleküls, an das die funktionelle Epoxid- oder Thiolgruppe angebunden sein kann;
- bedeutet "*chemische Intumeszenz"* die Bildung einer voluminösen, isolierenden Ascheschicht durch aufeinander abgestimmte Verbindungen, die bei Hitzeeinwirkung miteinander reagieren;
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- bedeutet "*dämmschichtbildend*", dass im Brandfall ein fester mikroporöser Kohleschaums entsteht, so dass die gebildete feinporige und dicke Schaumschicht, die sogenannte Aschekruste, je nach Zusammensetzung ein Substrat gegen Hitze isoliert;
- ist ein "*Kohlenstofflieferant*" eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als "*Kohlenstoffgerüstbildner*" bezeichnet;
- ist ein "*Säurebildner*" eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff "*Dehydrierungskatalysator*" verwendet;

- ist ein "*Treibmittel*" eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das Erweichte Bindemittel zu einem Schaum aufbläht (Intumeszenz); dieser Begriff wird gleichbedeutend mit "*Gasbildner*" verwendet;
- ist ein "*Aschekrustenstabilisator*" eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.
- ist ein "*Oligomer*" ein Molekül mit 2 bis 5 Wiederholungseinheiten und ist ein "*Polymer*" ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.
- Bedeutet "*Epoxidäquivalentmasse*" diejenige Menge an Epoxidharz in [g], die ein Äquivalent [Val] Epoxidfunktionen besitzt und berechnet sich aus der Molmasse *M* in [g/Mol] dividiert durch die Funktionalität *f* in [Val/Mol]; (EEW [g/Val]).

Erfindungsgemäß wird als Verlaufsadditiv ein Organopolysiloxan eingesetzt. Beispiele der Organopolysiloxane umfassen, sind aber nicht darauf beschränkt, seitenketten-modifizierte Polymethylsiloxane, ein- oder zweifach endständig modifizierte Polymethylsiloxane und sowohl seitenketten-modifzierte als auch endständig modifizierte Polymethylsiloxane, wie auch Siloxancopolymere. Als Organopolysiloxane eigenen sich insbesondere Alkyl- und Polyether-modifizierte Polysiloxane. Diese können alleine oder als Kombination von zwei oder mehreren davon verwendet werden.

In einer Ausführungsform ist das Organopolysiloxan ein alkyl-modifiziertes Polysiloxan, insbesondere ein Polyalkylsiloxan.

Geeignete Polyalkylsiloxane sind Polydialkylsiloxane, insbesondere Polyalkylmethylsiloxane der folgenden Formel (I) 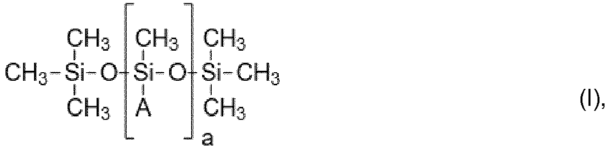 worin A einen linearen oder verzweigten Alkylrest, der gegebenenfalls substituiert sein kann, ist und a einen Wert von 3 bis zu 30.000 annehmen kann.

Der Alkylrest ist bevorzugt ein Alkylrest der folgenden Formel (1) 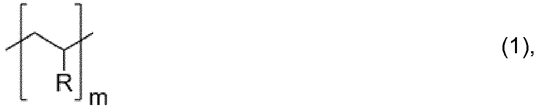 worin m eine Zahl zwischen 1 und 100 ist; R Wasserstoff oder ein linearer oder verzweigter Alkylrest der Formel (2) ist 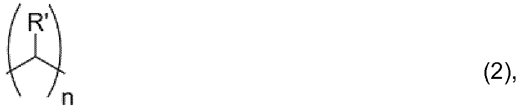 worin n eine Zahl zwischen 1 und 20 ist und R' eine lineare oder verzweigte C₁-C₆-Alkylgruppe ist.

Der einfachste Vertreter des Polydialkylsiloxans ist ein Polydimethylsiloxan der folgenden Formel (II) 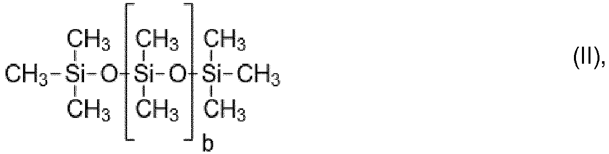 worin b einen Wert von 3 bis zu 30.000 annehmen kann.

In einer weiteren Ausführungsform ist das Organopolysiloxan ein Copolymer, insbesondere ein Blockpolymer, welches einen Polydimethylsiloxanblock und einen davon unterschiedlichen Polydialkylsiloxanblock, bei dem die Alkylgruppen gleich oder unterschiedlich sein können, umfasst.

Geeignete Blockpolymere sind Organopolyalkylsiloxane der folgenden Formel (III) 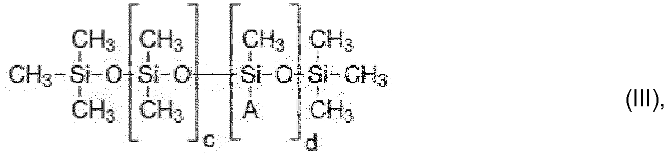 worin A dieselbe Bedeutung wie der Rest A in obiger Formel (I) hat. c und d geben jeweils einen durchschnittlichen Polymerisationsgrad an, wobei c und d zusammen (c + d) eine Zahl zwischen 3 und 30.000 ergeben.

In einer weiteren Ausführungsform ist das Organopolysiloxan ein Polyether-modifiziertes Polysiloxan.

Geeignete Polyether-modifizierte Polyalkylsiloxane sind Polyether-modifizierte Polymethylsiloxane der folgenden Formel (IV) 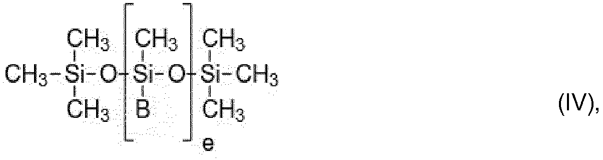 worin B R¹-(C₂H₄O)ₓ(C₃H₆O)_{y}-R² darstellt, worin
R¹ eine Einzelbindung oder eine Alkylengruppe ist,
R² ein Wasserstoffatom oder eine Alkylgruppe ist
e, x und y jeweils einen durchschnittlichen Polymerisationsgrad angeben, einschließlich des Falls, in dem entweder x oder y 0 ist, und wobei e eine Zahl zwischen 3 und 30.000 ist.

In einer Ausführungsform ist B beispielsweise unter folgenden Gruppen ausgewählt 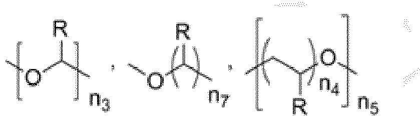 worin
n₃ eine Zahl zwischen 1 und 100,
n₅ eine Zahl zwischen 1 und 100,
n₄ und n₇ jeweils eine Zahl zwischen 1 und 10 ist;
R Wasserstoff oder ein linearer oder verzweigter Alkylrest der Formel 2 ist 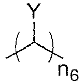 worin
n₆ eine Zahl zwischen 1 und 20 ist und
Y eine lineare oder verzweigte C₁-C₆-Alkylgruppe ist.

Geeignete Polyether-modifizierten Polysiloxane umfassen auch Copolymere mit einer oder mehreren Polyalkylenoxid-Einheit(en) in den Seitenketten, insbesondere Blockpolymere, welche einen Polydimethylsiloxanblock und einen oder mehrere davon unterschiedliche Polyalkylpolyethersiloxanblöcke, bei dem die Alkylgruppen gleich oder unterschiedlich sein können, umfasst. Ein Polyether-modifiziertes Polysiloxan, welches verwendet werden kann, hat folgende Formel (V) 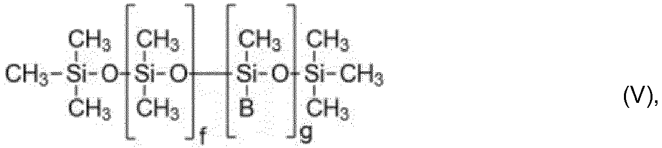 worin B dieselbe Bedeutung wie der Rest B in obiger Formel (VI) hat. f und g geben jeweils einen durchschnittlichen Polymerisationsgrad an, wobei f und g zusammen (f + g) eine Zahl zwischen 3 und 30.000 ergeben.

Auch Blockpolymere der folgenden Formel (VI) können verwendet werden: 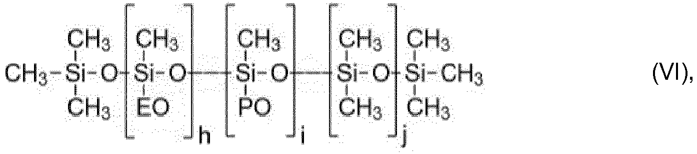 worin h, i und j jeweils einen durchschnittlichen Polymerisationsgrad angeben, wobei h, i und j zusammen (h + i + j) eine Zahl zwischen 3 und 30.000 ergeben; und EO Ethylenoxid und PO Propylenoxid bedeuten.

In einer weiteren Ausführungsform hat das Alkyl- oder Polyether-modifizierte Organopolysiloxan die folgende Formel (VII) 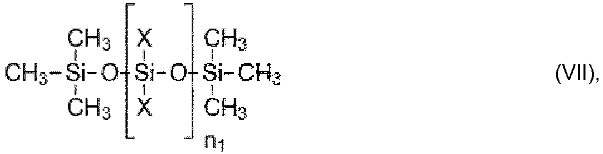 worin
n₁ eine Zahl zwischen 3 und 30.000 ist;
X jeweils, unabhängig voneinander, unter den folgenden Gruppen ausgewählt ist: 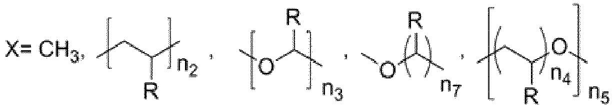 worin
n₂, n₃ und n₅ jeweils unabhängig voneinander eine Zahl zwischen 1 und 100 ist,
n₄ und n₇ jeweils eine Zahl zwischen 1 und 10 ist;
R Wasserstoff oder ein linearer oder verzweigter Alkylrest der Formel 2 ist 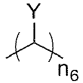 worin
n₆ eine Zahl zwischen 1 und 20 ist und
Y eine lineare oder verzweigte C₁-C₆-Alkylgruppe ist.

Das organische wärmehärtbare Polymer kann eine oder mehrere der folgenden funktionellen Gruppen enthalten: Epoxid-, Amin-, Ester-, Vinyl-, Amid-, Urethan-, Harnstoff-, Mercaptan-, Carbonsäure-, Acryoyl-, Methacryoyl-, Isocyanat-, Alkoxysilyl-, Anhydrid-, Hydroxyl- und Alkoxygruppen.

Organische wärmehärtbare Polymere, die verwendet werden können, sind: Epoxid-funktionelle Harze beispielsweise Harze auf der Basis von Digylcidylethern von Bisphenol A oder Epoxid-funktionelle Polysiloxane, Vinylesterharze beispielsweise (Meth)acrylatharze, Vinyl-funktionalisierte Harze beispielsweise Vinyl-funktionalisierte Polysiloxane und ungesättigte Polyester, Polyole, Alkydharze und Alkoxysilyl-funktionelle organische Harze oder Kombinationen davon. Geeignete Epoxid-funktionelle Harze umfassen: (i) Polyglycidylether, die von mehrwertigen Alkoholen, wie Ethylenglykol, Diethylenglykol, Triethylenglykol, 1,2-Propylenglykol, 1,4-Butylenglykol, 1,5-Pentandiol, 1,2,6-Hexantriol, Glycerin, Trimethylolpropan, Bisphenol A (ein Kondensationsprodukt von Aceton und Phenol), Bisphenol F (ein Kondensationsprodukt von Formaldehyd und Phenol), hydriertem Bisphenol A oder hydriertem Bisphenol F abgeleitet sind; (ii) Polyglycidylether von Polycarbonsäuren, die durch die Reaktion einer Epoxidverbindung, wie Epichlorhydrin mit einer aliphatischen oder aromatischen Polycarbonsäure oder dimerisierter Linolsäure, erhalten werden; (iii) epoxidierte olefinisch ungesättigte alicyclische Verbindungen, wie epoxidierte alicyclische Ether und Ester; (iv) Epoxidharze, die Oxyalkylengruppen enthalten; (v) Epoxidnovolakharze, die durch Reaktion eines Epihalohydrin (z.B. Epichlorhydrin) mit dem Kondensationsprodukt aus Aldehyd mit einem ein- oder mehrwertigen Phenol (z.B. Phenolformaldehydkondensat) erhalten werden; (vi) irgendeines der vorher genannten Epoxid-funktionellen Harze, das mit Polysiloxanseitengruppen modifiziert ist; (vii) einem Silikat-modifizierten Epoxidharz, beispielsweise das Reaktionsprodukt eines Tetraalkoxyorthosilikats oder einem teilweise kondensierten Oligomer davon mit einem Epoxidharz, das Hydroxylgruppen enthält, wie in der WO 2009/019296 beschrieben; und (viii) Mischungen davon.

Das Epoxid-funktionelle Harz hat bevorzugt ein Epoxidäquivalentgewicht im Bereich von 100 bis 3.000 g/eq, stärker bevorzugt 160 bis 1.000 g/eq, und noch stärker bevorzugt 160 bis 500 g/eq. Die organischen wärmehärtbaren Polymere können (Meth)acrylatpolymere sein, die Polymere mit endständigen Acrylat- oder Methacrylatgruppen umfassen. Beispiele geeigneter (Meth)acrylat-funktioneller Polymere sind: Urethanacrylate, Acrylat- oder Methacrylatester, die von einem Epoxidharz abgeleitet sind, Polyolacrylate, Polyetheracrylate, Polyesteracrylate, Melaminharzacrylate, Polyamidacrylate, Acrylpolymere mit angehängten Acrylgruppen, und Silikonacrylate.

Die organischen wärmehärtbaren Polymere können Polysiloxane sein, umfassend (Meth)acrylatharze, die Polysiloxanseitengruppen enthalten, und die in der WO 2010/054984 beschriebenen Polysiloxane, die Epoxid-funktionelle Harze umfassen.

Ist das organische Polymer ein wärmehärtbares Polymer oder enthält das organische Polymer wenigstens ein wärmehärtbares Polymer, umfasst die intumeszierende Zusammensetzung ferner wenigstens ein Härtungsmittel für das wärmehärtbare Polymer. Das wärmehärtbare Polymer oder die wärmehärtbaren Polymere bilden durch Reaktion (Vernetzungsreaktion) mit dem Härtungsmittel oder den Härtungsmitteln eine Beschichtung auf einem Substrat. Die Wahl des Härtungsmittels ist nicht beschränkt, vorausgesetzt es trägt funktionelle Gruppen, die mit den funktionellen Gruppen des wärmehärtbaren Harzes reagieren können, um eine Vernetzung zu bewirken. Ein Fachmann auf dem Gebiet der Beschichtungszusammensetzungen kann aufgrund seines Fachwissens ein geeignetes Härtungsmittel bestimmen. Für Epoxid-funktionelle organische Harze zum Beispiel, enthalten geeignete Härtungsmittel Amin- oder Thiol-funktionelle Gruppen, bevorzugt Amin-funktionelle Gruppen. Geeignete Beispiele an Härtungsmittel sind: Phenolharze, Polyamine, Polythiole, Polyanhydride und Polycarbonsäuren. "*Poly*" bedeutet dabei, dass das Härtungsmittel zwei oder mehr härtbare funktionelle Gruppen umfasst. Beispiele an Phenolharzen sind: Phenolnovolakharze, Bisphenolnovolakharze und Poly-*p*-vinylphenol.

Beispiele geeigneter Aminhärtungsmittel sind: Polyamide, polymere Mannichbasen, Amin-funktionelle Polypropylen- oder Polyethylenoxide und Polysiloxane, die Amingruppen enthalten. Aminhärtungsmittel bedeutet, dass das Härtungsmittel eine oder mehrere -NH- oder -NH₂-Gruppen enthält. Weitere Aminhärtungsmittel umfassen Aminosilane, wie Alkoxyaminoalkylsilane, 3-Aminopropyltriethoxysilan, 3-Aminopropyltrimethoxysilan, 3-Aminopropylmethyldimethoxysilan und 3-Aminopropylmethyldiethoxysilan, primäre Amine, wie N-(2-Aminoethyl)-3-aminopropyltrimethoxysilan, sekundäre Amine, wie N-Methyl- oder N-Phenyl-3-aminopropyltrimethoxysilan, Polyglykolether-modifizierte Aminosilane und Triamino-funktionelle Propyltrimethoxysilane. Ähnliche Aminosilane, die zwei oder drei Siliziumatome enthalten, können auch verwendet werden. Das Aminhärtungsmittel kann auch ein Addukt einer Epoxid-funktionellen Verbindung mit einer Amin-funktionellen Verbindung ein. Beispiele solcher Addukte sind aus der WO 2007/082853 A1 bekannt.

Beispiele von Thiol-funktionellen Härtungsmittel umfassen Pentaerithrittetrakis(3-mercaptopropionat), Polysulfidharze, Thiol-basierte Härtungsmittel, die durch eine Etherbindung an ein organisches Gerüst gebunden sind, Thiol-funkionelle Silane, wie Mercaptopropyltrimethoxysilan, Mercaptopropyltriethoxysilan, und Thiol-funktionelle Polysiloxane.

Beispiele von Polyanhydrid-Härtungsmittel umfassen Phthalsäureanhydrid, Tetrahydrophthalsäureanhydrid, Methyltetrahydrophthalsäureanhydrid, 3,6- Endomethylentetrahydrophthalsäureanhydrid, Hexachlorendomethylentetrahydrophthalsäureanhydride und Methyl-3,6-endomethylentetrahydrophthalsäureanhydrid.

Isocyanat-Härtungsmittel für Polyole umfassen beispielsweise Methylendiphenyldiisocyanat, Toluoldiisocyanat, Hexamethylendiisocyanat, Isophorondiisocyanat und polymere Formen und Mischungen davon.

Damit die Zusammensetzung das Bauteil, auch das sie aufgebracht wurde, vor Feuer oder gegen große Hitzeeinwirkung etwa in Folge eines Brandes schützen kann, ist es erforderlich, dass die Zusammensetzung nach der Aushärtung durch den Temperatureintrag eine isolierende Schicht bildet.

Zweckmäßig werden hierzu Verbindungen, auch dämmschichtbildende oder intumeszierende Additive genannt, eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator (auch Säurebildner genannt) und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt.

Es sei erwähnt, dass das Bindemittel im Brandfall selbst auch die Funktion eines Kohlenstofflieferanten und/oder Treibmittels haben kann. Die erfindungsgemäße Zusammensetzung umfasst ein Epoxidharz, welches aufgrund seiner funktionellen Gruppen und seines Kohlenstoffgerüstes sowohl die Funktion eines Kohlenstofflieferanten und die eines Treibmittels erfüllen kann. Hierdurch kann auf zusätzliche Kohlenstofflieferanten und Treibmittel verzichtet werden. Erfindungsgemäß enthält die Zusammensetzung daher einen Säurebildner.

Als Säurebildner bzw. Dehydrierungskatalysatoren kommen die in intumeszierenden Brandschutzformulierungen üblicherweise verwendeten und dem Fachmann bekannten Verbindungen in Betracht, insbesondere ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

In einer Ausführungsform der Erfindung kann die Zusammensetzung als zusätzliches dämmschichtbildendes Additiv einen Kohlenstofflieferanten enthalten.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

In einer weiteren Ausführungsform der Erfindung kann die Zusammensetzung als zusätzliches dämmschichtbildendes Additiv ein Treibmittel enthalten.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

In einer weiteren Ausführungsform der Erfindung kann die Zusammensetzung ferner eine thermisch expandierbare Verbindung, wie eine Graphit-Interkallationsverbindung, die auch als Blähgraphit bekannt sind, enthalten. Diese können ebenfalls ins Bindemitteleingebunden werden.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1,

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben. Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder mehrkomponenten-System konfektioniert werden.

Das Epoxidharz ist bevorzugt in einer in einer Menge von 3 bis 95 Gew.-%, besonders bevorzugt in einer Menge von 5 bis 80 Gew.-% in der Zusammensetzung enthalten.

Wird ein Reaktivverdünner verwendet, so ist dieser in einer Menge von 0,25 bis 70 Gew.-%, bevorzugt in einer Menge von 0,5 bis 50 Gew.-% in der Zusammensetzung enthalten.

Die Amin-funktionalisierte bzw. die Thiol-funktionalisierte Verbindung ist bevorzugt in einer Menge von 5 bis 97 Gew.-%, besonders bevorzugt in einer Menge von 5 bis 95 Gew.-% in der Zusammensetzung enthalten. Wird eine Mischung aus der Amin-funktionalisierten und der Thiol-funktionalisierten Verbindung verwendet, so beziehen sich die eben genannten Mengen auf die Mischung.

Die dämmschichtbildenden Additive können in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil in der Zusammensetzung so hoch wie möglich eingestellt. Bevorzugt beträgt der Anteil in der Zusammensetzung 35 bis 85 Gew.-% und besonders bevorzugt 40 bis 85 Gew.-%.

Die Zusammensetzung kann als Paste mit einem Pinsel, einer Rolle oder durch Sprühen auf das Substrat, insbesondere metallische Substrat aufgebracht werden. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine hohe mechanische Beständigkeit aus.

Die erfindungsgemäße Zusammensetzung ist besonders als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung von metallischen und/oder nicht metallischen Substraten, ganz besonders für Konstruktionselemente oder Bauelemente aus Stahl, Beton, Holz und anderen Materialien, wie etwa Kunststoffen, insbesondere als Brandschutzbeschichtung.

Die folgenden Beispiele dienen der weiteren Erläuterung der Erfindung.

### AUSFÜHRUNGSBEISPIELE

Für die Herstellung von erfindungsgemäßen Zusammensetzungen werden Formulierungen mit den in Tabelle 1 angegeben Einzelkomponenten und mit den in Tabelle 2 angegebenen Verlaufsadditiven mit einem Dissolver vermengt und homogenisiert.

Zur Herstellung der erfindungsgemäßen Formulierungen sowie der Vergleichsformulierungen wurden folgende Bestandteile verwendet:

| **Bestandteil** | **Beschreibung** | **Hersteller** |
|---|---|---|
| CeTePox^{®} 2200 H | Mercaptanterminiertes Polymer | CTP Chemicals and Technologies for Polymers GmbH |
| 1,3-BAC | 1,3-Bis(aminomethyl)cyclohexan | Itochu Deutschland GmbH |
| PUR 812 | 1,4-Diazabicyclooctan, 25-50%ige Lösung | Rühl Puromer GmbH |
| Byk 9076 | Alkylammoniumsalz eines hochmolekularen Copolymeren | BYK-Chemie GmbH |
| Dysperbyk-2152 | Hochverzweigter Polyester | BYK-Chemie GmbH |
| Coatforce CF 30 | Künstlich hergestellte ungerichtete glasartige (Silikat-)Fasern mit einem Anteil an Alkali- und Erdalkalimetalloxiden (Na2O+K2O+CaO+MgO+BaO) von mehr als 18 Gew.- %] | ROCKWOOL B.V. t.a. LAPINUS FIBRES |
| Polwhite E | Kaolin | Imerys Minerals Ltd |
| Kronos 2056 | Titandioxid | Kronos International, Inc. |
| Epilox F 17-00 | Epoxidharz auf der Basis von Bisphenol F | LEUNA-Harze GmbH |
| Araldite DY-026 | 1,4-Butandioldiglycidylether | Huntsman Advanced Materials (Europe) BVBA |
| Dynasylan GLYMO | [3-(2,3-Epoxypropoxy) propyl]trimethoxysilan | Evonik Resource Efficiency GmbH |
| Tri-iso-butylphosphat | Tri-iso-butylphosphat | LANXESS Deutschland GmbH |
| BYK-W 9010 | Copolymer mit sauren Gruppen | BYK-Chemie GmbH |
| SFC 0,20 MFC | Carbon-Faserfüllstoff | STW Schwarzwälder Textil-Wer |
| Melafine | Melamin | OCI Nitrogen |
| Cab-O-Sil^{®} TS-720 | mit Polydimethylsiloxan oberflächenbehandelte pyrogene Kieselsäure | Cabot Corporation |
| Exolit AP 462 | Ammoniumpolyphosphat | Clariant SE |

Die Messung der dynamischen Viskosität aller Mischungen erfolgte mit Hilfe eines Rheometers (Malvern Kinexus Ultra+) unter Einsatz eines Platte-Platte Messsystems nach DIN 53019. Der Durchmesser der Platte betrug 20 mm und der Spaltabstand betrug 0,3 mm. Es wurde folgende Methode angewendet: Es wurde bei 40 °C in einem ersten Abschnitt in 12 mal 15 Sekunden bei 0,1/s geschert und in einem zweiten Abschnitt bei 40 °C in 6 Stufen zu je 11 Sekunden logarithmisch die Schergeschwindigkeit von 0,1/s auf 10/s gesteigert. In einem dritten Abschnitt wurde die bei 40 °C in 5 Stufen zu je 8 Sekunden logarithmisch die Schergeschwindigkeit von 21,54/s auf 464,2/s gesteigert und in einem letzten Abschnitt wurde bei 40 °C 17 mal 10 Sekunden bei 0,1/s geschert. Die abgebildeten Viskositätswerte entsprechen dem Mittelwert der im ersten Abschnitt (bei 0,1/s) gemessenen Werte bzw. dem im dritten Abschnitt (bei 215/s) gemessenen Wert.

Für Brandtests wurden Proben hergestellt, in dem eine Stahlplatte (280 mm x 280 mm x 5 mm) mit der jeweiligen Formulierung beschichtet wurde. Die Schichtdicke der aufgetragenen Formulierungen betrug 7 mm. Nach Aufbringen wurden die aufgebrachte Schicht mindestens 10 Tage bei 22 °C gelagert, bevor der Brandtest durchgeführt wurde. Die Rückseite der Stahlplatten war mit jeweils drei Thermoelementen versehen, welche die Temperatur auf der dem Feuer abgewandten Seite aufzeichneten und über welche das arithmetische Mittel gebildet wurde. Die Proben wurden einem Brandtest unterworfen, indem sie in die Wand eines Ofens eingebaut wurden, welcher von innen befeuert wurde. Die Heizrate des Ofens entsprach der in ISO 834 beschriebenen Rate. Die Zeit, bis eine Temperatur von 300°C, bzw. 500°C auf der rückseitigen Stahloberfläche erreicht wurde, entspricht dabei dem Wert TTF (300°C/7mm), respektive TTF (500°C/7mm) in Tabelle 3.

**Tabelle 1: Zusammensetzung der Vergleichsformulierungen V1 bis V5 und der Beispielformulierungen 1 bis 6**

| **Beispiel** | **V1** | **V2** | **V3** | **V4** | **V5** | **1** | **2** | **3** | **4** | **5** | **6** |
|---|---|---|---|---|---|---|---|---|---|---|---|
| CeTePox 2200 H | 147,62 g | 146,62 g | 137,09 g | 146,72 g | 136,97 g | 146,54 g | 18,39 g | 146,58 g | 146,53 g | 146,9 g | 137,00 g |
| 1,3-BAC | 15,43 g | 15,62 g | 14,39 g | 15,48 g | 14,38 g | 15,37 g | 1,92 g | 15,34 g | 15,82 g | 15,5 g | 14,39 g |
| PUR 812 | 1,59g | 3,11 g | 2,36 g | 2,62 g | 1,65g | 1,61 g | | 2,45 g | 2,49 g | 2,78 g | 1,58g |
| Byk 9076 | 6,47 g | 6,23 g | | | | 6,51 g | | 6,41 g | 6,48 g | 6,79 g | |
| Dysperbyk-2152 | | | 11,65 g | 6,36 g | 11,57 g | | 1,88 g | | | | 11,37 g |
| Coatforce CF 30 | 57,75 g | 57,64 g | 57,61 g | 57,72 g | 57,92 g | 57,68 g | 7,8 g | 57,65 g | 57,66 g | 57,72 g | 57,70 g |
| Polwhite E | 13,94 g | 13,63 g | 13,96 g | 13,78 g | 14,00 g | 13,87 g | 1,97 g | 13,89 g | 13,85 g | 13,85 g | 13,95 g |
| Kronos 2056 Titanium Oxide | 137,60 g | 137,78 g | 137,70 g | 137,75 g | 137,81 g | 137,61 g | 18,62 g | 137,74 g | 137,76 g | 137,61 g | 137,76 g |
| Epilox F 17-00 | 155,47 g | 154,78 g | 145,92 g | 154,98 g | 144,50 g | 154,77 g | 19,39 g | 154,62 g | 154,46 g | 154,81 g | 144,31 g |
| Araldite DY-026 | 8,79 g | 8,86 g | 8,59 g | 8,79 g | 8,28 g | 8,77 g | 1,06 g | 8,75 g | 8,72 g | 8,82 g | 8,18 g |
| Dynasylan GLYMO | 19,41 g | 19,56 g | 18,14 g | 21,56 g | 18,32 g | 19,46 g | 2,39 g | 19,99 g | 20,79 g | 19,39 g | 18,77 g |
| Tri-iso-butylphosphat | 69,55 g | 69,99 g | 69,60 g | 69,67 g | 69,53 g | 69,74 g | 9,36 g | 70,18 g | 69,81 g | 69,58 g | 69,54 g |
| BYK-W 9010 | 6,90 g | 6,87 g | 24,97 g | 6,95 g | 26,09 g | 6,88 g | 3,38 g | 6,92 g | 6,99 g | 6,95 g | 24,81 g |
| Carbon-Faserfüllstoff SFC 0,20 MFC | 11,60 g | 11,56 g | 11,58 g | 11,56 g | 11,59 g | 11,59 g | 1,56 g | 11,56 g | 11,6 g | 11,58 g | 11,56 g |
| Melafine | 82,88 g | 82,96 g | 82,62 g | 82,88 g | 82,87 g | 83,40 g | 49,77 g | 82,85 g | 82,79 g | 82,96 g | 82,94 g |
| Cab-O-Sil TS-720 | 11,59 g | 11,49 g | 11,32 g | 11,43 g | 11,78 g | 11,84 g | 11,71g | 11,46 g | 11,45 g | 11,6g | 11,54 g |
| Exolit AP 462 | 352,90 g | 352,87 g | 352,97 g | 352,86 g | 353,03 g | 353,00 g | 0,518 g | 352,53 g | 352,89 g | 352,68 g | 352,81 g |
| Verlaufsadditiv ¹⁾ siehe Tabelle 2 | 1) | 1) | 1) | 1) | 1) | ¹⁾ | 1) | 1) | 1) | 1) | 1) |

**Tabelle 2: Anteile an Verlaufsadditiv in den Vergleichsbeispiel- und Beispielsformulierungen aus Tabelle 1:**

| **Beispiel** | **Menge [g]** | **Verlaufsadditiv** | **Zusammensetzung** |
|---|---|---|---|
| V1 | - | - | |
| V2 | 2,19 | Disparlon L-1982N | fluoriertes Polyacrylat |
| V3 | 2,22 | Efka FL 3741 | Fluoriertes Polyacrylat |
| V4 | 2,33 | Efka FL 3745 | Fluoriertes Polyacrylat |
| V5 | 2,58 | Byk 361 N | Fluoriertes Polyacrylat |
| Beispiel 1 | 2,23 | Afcona 3239 | Organisch modifiziertes Polyalkyl Polysiloxan |
| Beispiel 2 | 0,30 | Afcona 3238 | Polyalkyl Polysiloxan |
| Beispiel 3 | 2,24 | Efka SL 3200 | Polysiloxan Copolymer |
| Beispiel 4 | 2,22 | Efka SL 3288 | Polysiloxan Copolymer |
| Beispiel 5 | 2,30 | Byk 378 | Polyethermodifiziertes Polysiloxan |
| Beispiel 6 | 2,19 | Afcona 3280 | Polysiloxan Copolymer |

**Tabelle 3: Ergebnisse der Viskositätsmessungen und der Brandtests**

| **Beispiel** | **Viskosität bei Scherrate 0,1 s⁻¹ [Pas]** | **Viskosität bei Scherrate 215 s⁻¹ [Pas]** | **TTF (300°C / 7mm) [min]** | **TTF (500°C / 7mm) [min]** |
|---|---|---|---|---|
| | | | | |
| V1 | 98,19 | 7,61 | 68,99 | 117,99 |
| V2 | 82,36 | 6,85 | 59,10 | 101,60 |
| V3 | 72,45 | 6,39 | 59,53 | 104,53 |
| V4 | 32,52 | 5,83 | 55,61 | 102,61 |
| V5 | 63,7 | 6,53 | 56,04 | 98,54 |
| | | | | |
| Beispiel 1 | 31,48 | 5,53 | 67,77 | 117,75 |
| Beispiel 2 | 74,9 | 6,48 | 71,85 | 119,85 |
| Beispiel 3 | 72,45 | 6,39 | 63,19 | 109,69 |
| Beispiel 4 | 160,2 | 6,2 | 62,47 | 106,97 |
| Beispiel 5 | 78,07 | 6,45 | 64,96 | 114,46 |
| Beispiel 6 | 79,18 | 6,58 | 65,95 | 107,45 |

Zur Messung der Oberflächenrauigkeit wurde einmal eine Formulierung ohne Verlaufsadditiv als Vergleich (V1) und einmal eine Formulierung mit einem Verlaufsadditiv (Beispiel 1) mit Hilfe eines Airless 2-Komponenten Sprühgerätes (Grako Airless XM 70 Plural-component sprayer, model XM3B00) auf eine Stahlplatte (280 mm 280 mm x 5 mm) appliziert und bei 22 °C für mindestens 10 Tage ausgehärtet. Die Dicke der Schicht betrug jeweils 1 mm - 1,5 mm. Die Messung erfolgte mit einem Weißlichtmikroskop Alicona Infinite Focus gemäß EN ISO 25178 mittels Fokusvariation. Tabelle 4 zeigt die Ergebnisse der Messungen.

**Tabelle 4: Ergebnisse der Messung der Oberflächenrauigkeit**

| **Beispiel** | **Grenzwellenlänge [µm]** | **Ra [µm]** | **Rq [µm]** | **Rz [µm]** |
|---|---|---|---|---|
| V1 | 8000 | 12,28 ± 8,29 | 17,64 ± 5,43 | 3,94 ± 0,63 |
| 1 | 8000 | 8,75 ± 5,54 | 13,78 ± 1,86 | 3,16 ± 0,36 |

| | | | | |
|---|---|---|---|---|
| Ra = Durchschnittliche Rauigkeit des Profils Rq = Durchschnittliche Quadratischer Mittelwert des Rauigkeitsprofils Rz = Durschnittliche "Gipfel-Tal-Unterschied" des Rauigkeitsprofils | | | | |

**Tabelle 5: Ergebnisse der Glanzmessung**

| **Beispiel** | **Glanz** | | |
|---|---|---|---|
| | **20°** | **60°** | **85°** |
| V1 (1.Messung) | 3,6 ± 0,1 | 24,2 ± 0,5 | 47,1 ± 3,1 |
| V1 (2.Messung) | 4,8 ± 0,7 | 28,9 ± 2,8 | 40,5 ± 2,0 |
| 1 (1.Messung) | 6,3 ± 0,4 | 36,1 ± 1,8 | 65,3 ± 2,4 |
| 1 (2.Messung) | 6,1 ± 0,3 | 34,4 ± 1,3 | 67,1 ± 1,4 |

## Patentansprüche

1. Brandschutzzusammensetzung umfassend ein organisches wärmehärtbares Polymer, ein Härtungsmittel für das organische wärmehärtbaren Polymers, einen Säurebildner und bis zu 0,2 Gew.-%, bezogen auf das Gewicht des organischen wärmehärtbaren Polymers und des Härtungsmittels, eines Organopolysiloxans.

2. Brandschutzzusammensetzung nach Anspruch 1, wobei das Organopolysiloxan ein Alkyl- oder Polyether-modifiziertes Polysiloxan ist.

3. Brandschutzzusammensetzung nach einem der vorhergehenden Ansprüche, wobei das organische wärmehärtbare Polymer eine oder mehrere funktionelle Gruppen, ausgewählt aus der Gruppe bestehend aus Epoxid-, Amin-, Ester-, Vinyl-, Amid-, Urethan-, Harnstoff-, Mercaptan-, Carbonsäure-, Acryoyl-, Methacryoyl-, Isocyanat-, Alkoxysilyl-, Anhydrid-, Hydroxyl- und Alkoxygruppen enthält.

4. Brandschutzzusammensetzung nach einem der vorhergehenden Ansprüche, wobei die Brandschutzzusammensetzung ferner einen Katalysator für die Reaktion des organischen wärmehärtbaren Polymers mit dem Härtungsmittel enthält.

5. Brandschutzzusammensetzung nach Anspruch 3 oder 4, wobei das organische wärmehärtbare Polymer ein Epoxidharz und das Härtungsmittel eine Amin-funktionalisierte Verbindung oder eine Thiol-funktionalisierte Verbindung oder eine Kombination davon ist.

6. Brandschutzzusammensetzung nach Anspruch 4 und 5, wobei der Katalysator ein Phenol-Derivat oder ein tertiäres Amin ist.

7. Brandschutzzusammensetzung nach einem der vorhergehenden Ansprüche, wobei die Brandschutzzusammensetzung ferner mindestens einen Aschekrustenstabilisator enthält.

8. Verwendung eines Organopolysiloxans in Brandschutzzusammensetzungen auf Basis eines organischen wärmehärtbaren Polymers und eines Härtungsmittels mit einem Feststoffgehalt von 50 Gew.-% oder mehr zur Verringerung der Viskosität der Brandschutzzusammensetzung, wobei das Organopolysiloxan in einer Menge von bis zu 0,2 Gew.-%, bezogen auf das Gewicht des organischen wärmehärtbaren Polymers und des Härtungsmittels, in der Brandschutzzusammensetzung enthalten ist.

9. Verwendung eines Organopolysiloxans in Brandschutzzusammensetzungen auf Basis eines organischen wärmehärtbaren Polymers und eines Härtungsmittels mit einem Feststoffgehalt von 50 Gew.-% oder mehr zur Verbesserung der Oberflächenstruktur und des Glanzes der ausgehärteten Brandschutzzusammensetzung, wobei das Organopolysiloxan in einer Menge von bis zu 0,2 Gew.-%, bezogen auf das Gewicht des organischen wärmehärtbaren Polymers und des Härtungsmittels, in der Brandschutzzusammensetzung enthalten ist.

## Claims

1. Flame retardant composition comprising an organic heat-curable polymer, a curing agent for the organic heat-curable polymer, an acid former and up to 0.2 wt.% organopolysiloxane, based on the weight of the organic heat-curable polymer and the curing agent.

2. Flame retardant composition according to claim 1, wherein the organopolysiloxane is an alkyl-modified or polyether-modified polysiloxane.

3. Flame retardant composition according to either of the preceding claims, wherein the organic heat-curable polymer contains one or more functional groups selected from the group consisting of epoxy, amine, ester, vinyl, amide, urethane, urea, mercaptan, carboxylic acid, acryoyl, methacryoyl, isocyanate, alkoxysilyl, anhydride, hydroxyl and alkoxy groups.

4. Flame retardant composition according to any of the preceding claims, wherein the flame retardant composition further contains a catalyst for the reaction of the organic heat-curable polymer with the curing agent.

5. Flame retardant composition according to either claim 3 or claim 4, wherein the organic heat-curable polymer is an epoxy resin and the curing agent is an amine-functionalized compound or a thiol-functionalized compound or a combination thereof.

6. Flame retardant composition according to either claim 4 or claim 5, wherein the catalyst is a phenol derivative or a tertiary amine.

7. Flame retardant composition according to any of the preceding claims, wherein the flame retardant composition further contains an ash crust stabilizer.

8. Use of an organopolysiloxane in flame retardant compositions based on an organic heat-curable polymer and a curing agent having a solids content of 50 wt.% or more to reduce the viscosity of the flame retardant composition, wherein the organopolysiloxane is contained in the flame retardant composition in an amount of up to 0.2 wt.%, based on the weight of the organic heat-curable polymer and the curing agent.

9. Use of an organopolysiloxane in flame retardant compositions based on an organic heat-curable polymer and a curing agent having a solids content of 50 wt.% or more to improve the surface structure and the gloss of the cured flame retardant composition, wherein the organopolysiloxane is contained in the flame retardant composition in an amount of up to 0.2 wt.%, based on the weight of the organic heat-curable polymer and the curing agent.

## Revendications

1. Composition ignifuge comprenant un polymère thermodurcissable organique, un agent de durcissement pour le polymère thermodurcissable organique, un générateur d'acide et jusqu'à 0,2 % en poids, sur la base du poids du polymère thermodurcissable organique et de l'agent de durcissement, d'un organopolysiloxane.

2. Composition ignifuge selon la revendication 1, dans laquelle l'organopolysiloxane est un polysiloxane modifié par un alkyle ou un polyéther.

3. Composition ignifuge selon l'une des revendications précédentes, dans laquelle le polymère thermodurcissable organique contient un ou plusieurs groupes fonctionnels choisis dans le groupe constitué par les groupes époxy, amine, ester, vinyle, amide, uréthane, urée, mercaptan, acide carboxylique, acryoyle, méthacryoyle, isocyanate, alcoxysilyle, anhydride, hydroxyle et alcoxy.

4. Composition ignifuge selon l'une des revendications précédentes, dans laquelle la composition ignifuge contient en outre un catalyseur pour la réaction du polymère thermodurcissable organique avec l'agent de durcissement.

5. Composition ignifuge selon la revendication 3 ou 4, dans laquelle le polymère thermodurcissable organique est une résine époxy et l'agent de durcissement est un composé à fonction amine ou un composé à fonction thiol ou une combinaison de ceuxci.

6. Composition ignifuge selon les revendications 4 et 5, dans laquelle le catalyseur est un dérivé de phénol ou une amine tertiaire.

7. Composition ignifuge selon l'une des revendications précédentes, dans laquelle la composition ignifuge contient en outre au moins un stabilisateur de croûte de cendres.

8. Utilisation d'un organopolysiloxane dans des compositions ignifuges à base d'un polymère thermodurcissable organique et d'un agent de durcissement comportant une teneur en matière solide de 50 % en poids ou plus pour réduire la viscosité de la composition ignifuge, l'organopolysiloxane étant contenu dans la composition ignifuge en une quantité allant jusqu'à 0,2 % en poids, sur la base du poids du polymère thermodurcissable organique et de l'agent de durcissement.

9. Utilisation d'un organopolysiloxane dans des compositions ignifuges à base d'un polymère thermodurcissable organique et d'un agent de durcissement comportant une teneur en matière solide de 50 % en poids ou plus pour améliorer la structure de surface et le brillant de la composition ignifuge durcie, l'organopolysiloxane étant contenu dans la composition ignifuge en une quantité allant jusqu'à 0,2 % en poids, sur la base du poids du polymère thermodurcissable organique et de l'agent de durcissement.
